# FASCICULE DE BREVET EUROPEEN

(11) **EP 0 842 036 B1**
(45) Date de publication et mention de la délivrance du brevet: **24.11.1999**
(21) Numéro de dépôt: 96927114.7
(22) Date de dépôt: 31.07.1996
(51) Int. Cl.: B29C 49/56, B29C 33/26

(54) **DISPOSITIF DE MOULAGE DE RECIPIENTS EN MATERIAU THERMOPLASTIQUE ET INSTALLATION DE FABRICATION DE RECIPIENTS EN FAISANT APPLICATION**
VORRICHTUNG ZUM FORMEN VON BEHÄLTERN AUS KUNSTSTOFF UND ANLAGE ZUM HERSTELLEN VON BEHÄLTERN UNTER VERWENDUNG DER VORRICHTUNG
DEVICE FOR MOULDING CONTAINERS FROM A THERMOPLASTIC MATERIAL, AND CONTAINER PRODUCTION PLANT USING SAME

(30) Priorité: 03.08.1995 FR 9509468
(43) Date de publication de la demande: 20.05.1998
(73) Titulaire: SIDEL, 76930 Octeville-sur-Mer (FR)
(72) Inventeur: GUIFFANT, Alain, F-76600 Le Havre (FR); GROUAS, Jean-François, F-76133 Epouville (FR)
(74) Mandataire: Gorrée, Jean-Michel
(86) Numéro de dépôt international: FR9601207
(87) Numéro de publication internationale: WO9705999

(56) Documents cités:
- EP-A- 0 305 705
- EP-A- 0 371 175
- EP-A- 0 456 866
- FR-A- 2 653 058
- US-A- 5 225 216

## Description

La présente invention concerne des perfectionnements apportés aux dispositifs de moulage, par soufflage ou étirage-soufflage, de récipients, notamment de bouteilles, à partir de préformes en matériau thermoplastique, ce dispositif comportant un moule de type portefeuilles présentant deux demi-coquilles raccordées l'une à l'autre par un axe de pivotement mutuel coïncidant avec des bords respectifs des deux demi-coquilles et des moyens d'actionnement associés aux deux demi-coquilles pour faire pivoter celles-ci l'une par rapport à l'autre dans le sens de la fermeture du moule ou dans le sens de l'ouverture du moule, ainsi qu'aux installations de fabrication de récipients qui font application d'un tel dispositif de moulage.

Le document FR-A-2 646 802 montre, à sa figure 4, un agencement de moule portefeuilles tel que précité, dans lequel la fermeture et l'ouverture du moule sont obtenues par un mouvement de rotation alternatif d'un bras d'entraînement. Ledit mouvement alternatif de rotation est décrit et représenté comme étant conféré par un arbre moteur perpendiculaire audit bras auquel il est solidarisé par un emmanchement sur carré et aucune information n'est fournie sur la manière dont l'arbre moteur lui-même est animé.

La présente invention a essentiellement pour but de proposer une solution technique simple permettant d'animer un moule tel que celui de la figure 4 du document précité et de proposer également, en raison même de la simplicité desdits moyens, une installation complète de fabrication architecturée autour d'un tel dispositif de moulage à moule unique, dont les demi-coquilles sont pivotantes autour d'un axe fixe, qui soit de conception simple et fiable, et apte à conserver un fonctionnement synchrone de toutes ses parties composantes.

Un tel dispositif à moule unique et axe de pivotement fixe et certes déjà connu d'après le document EP 0 456 866. Toutefois ce document n'aborde pas le problème d'une synchronisation de l'ouverture et de la fermeture du moule avec le fonctionnement des autres éléments de la machine.

A ces fins, selon un premier de ses aspects, l'invention propose un dispositif de moulage tel que mentionné au préambule, à moule unique et axe de pivotement fixe, qui, étant agencé conformément à l'invention, se caractérise essentiellement en ce que les moyens d'actionnement comprennent un bras mobile monté à libre rotation sur un axe de support et solidarisé auxdites deux demi-coquilles, ce bras supportant en outre un galet suiveur, alternativement une came de guidage apte à coopérer avec une came de guidage tournante, alternativement respectivement un galet suiveur entraîné sur une trajectoire circulaire, ladite came étant profilée de manière à provoquer le déplacement du bras afin de commander l'ouverture et la fermeture du moule, et des moyens moteurs pour entraîner la came tournante, alternativement respectivement le galet suiveur, lesdits moyens moteurs étant synchronisés avec l'alimentation du moule en préformes.

De préférence, l'axe de support du bras est situé dans une zone du bras comprise entre ses deux extrémités; une première extrémité du bras est solidarisée aux deux demi-coquilles et une seconde extrémité du bras supporte le galet suiveur, alternativement respectivement la came; d'une façon en soi connue, les moyens d'actionnement peuvent alors comprendre en outre deux biellettes articulées à libre rotation par une de leurs extrémités à la susdite première extrémité du bras et articulées à libre rotation par leur autre extrémité respectivement aux deux demi-coquilles de part et d'autre de l'axe de pivotement mutuel de celles-ci.

Dans un exemple de réalisation préféré, le galet suiveur est porté par le bras et la came tournante est ménagée dans ou supportée par un plateau tournant.

Pour constituer un dispositif ayant à la fois un fonctionnement fiable et une structure simple, de préférence on prévoit que la came est configurée pour coopérer avec le galet suiveur au moins depuis le début d'ouverture du moule jusqu'à au moins la fin de fermeture du moule et des moyens de verrouillage auxiliaire, indépendants des moyens d'actionnement précités, sont prévus pour maintenir le moule verrouillé au cours du moulage depuis la fin de fermeture du moule jusqu'au début d'ouverture du moule ; avantageusement alors la came s'étend selon un tronçon ouvert et ne coopère plus avec le galet suiveur entre au moins la fin du verrouillage du moule et au moins le début du déverrouillage du moule.

Dans un agencement particulièrement préféré, auquel est associé un mécanisme d'amenée des préformes chaudes à pince tournante, la pince tournante est coaxiale à la came tournante, alternativement respectivement au galet tournant, et solidaire de celle-ci, alternativement respectivement de celui en rotation : ce grâce à quoi on est assuré d'une synchronisation parfaite de l'opération d'amenée des préformes chaudes dans le moule (alimentation du moule) et de l'opération de moulage, et cette synchronisation est obtenue sans faire intervenir de complexes moyens externes, en constituant une structure remarquable par sa simplicité et son faible volume.

Selon un second aspect de l'invention, il est proposé une installation de fabrication de récipients, notamment de bouteilles en matériau thermoplastique par soufflage ou étirage-soufflage de préformes chaudes, comportant
- des moyens d'alimentation en préformes présentées accolées les unes à la suite des autres en position verticale,
- une roue de chargement et de mise à un pas d'espacement prédéterminé des préformes délivrées par les moyens d'alimentation,
- une chaîne sans fin de moyens de transfert des préformes entraînée par une roue d'entraînement et agencée pour saisir les préformes une à une sur la roue de chargement et à les faire traverser un four de chauffage à température prédéterminée en position col en bas,
- une pince tournante d'introduction apte à saisir les préformes une à une sur la chaîne de transfert et les amener dans le dispositif de moulage,
- un dispositif de moulage à moule unique du genre ci-dessus, et
- une pince tournante d'extraction apte à saisir les récipients moulés dans le dispositif de moulage et à les emmener vers des moyens d'évacuation, installation qui, étant agencée conformément à l'invention se caractérise essentiellement en ce que qu'elle comprend en outre
- un organe moteur tournant unique,
- et des moyens tournants d'entraînement, à lien sans fin, propres à entraîner, sans possibilité de glissement, les éléments ci-dessus de l'installation à partir du moteur unique.

De préférence la pince tournante d'introduction est coaxiale à l'axe de rotation de la came tournante et solidaire de celle-ci en rotation ; dans ce cas, il est avantageux que d'une part la came tournante et la pince d'introduction, d'autre part la pince d'extraction et d'autre part enfin la roue d'entraînement de la chaîne de transfert soient entraînées par des courroies respectives et, pour simplifier au maximum l'agencement de l'installation, on peut prévoir de façon souhaitable que la roue de chargement est entraînée par la chaîne de transfert.

Grâce à l'ensemble des dispositions envisagées dans le cadre de l'invention, il est possible de réaliser une installation de fabrication de récipients à moule unique dans laquelle un seul organe moteur est utilisé pour l'entraînement positif de tous les éléments composants mobiles, lesquels sont alors entraînés en synchronisme sans glissement : on constitue ainsi une installation mécaniquement simple et fonctionnellement fiable.

L'invention sera mieux comprise à la lecture de la description détaillée qui suit d'un mode de réalisation préféré donné uniquement à titre d'exemple purement illustratif. Dans cette description on se référe aux dessins annexés sur lesquels :
- la figure 1 est une vue schématique, de dessus, d'un dispositif de moulage agencé conformément à l'invention, et
- la figure 2 est une vue très schématique, de dessus, d'une installation de fabrication de récipient agencée autour d'un dispositif de moulage à moule unique selon la figure 1.

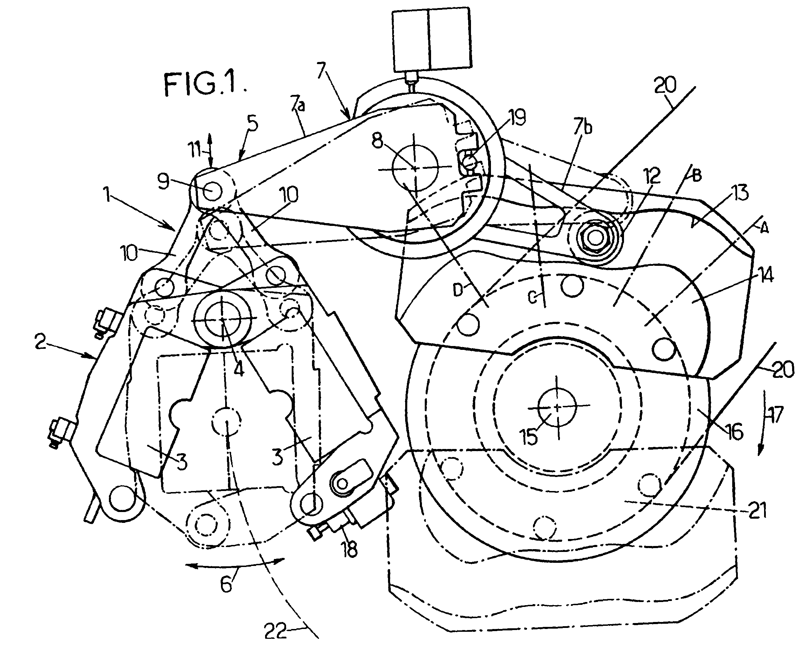

En se reportant tout d'abord à la figure 1, la référence numérique 1 désigne dans son ensemble un dispositif de moulage par soufflage ou étirage-soufflage de récipients, notamment de bouteilles, à partir de préformes chaudes en matériau thermoplastique tel par exemple le polyéthylènetérephtalate PET, le polyéthylènenaphtalate PEN, ou autre. Le dispositif 1 comporte un moule unique 2 de type portefeuille présentant deux demicoquilles 3 raccordées l'une à l'autre par un axe fixe de pivotement mutuel 4 coïncidant avec des bords respectifs des deux demi-coquilles 3.

Des moyens d'actionnement 5 sont-associés aux deux demi-coquilles 3 pour faire pivoter celles-ci l'une par rapport à l'autre dans le sens de la fermeture du moule ou dans le sens de l'ouverture du moule (flèche 6). Lesdits moyens d'actionnement 5 comprennent un bras 7 monté librement oscillant autour d'un axe 8 parallèle au susdit axe 4, l'axe 8 étant de préférence disposé entre les extrémités libres du bras 7. A une de ses extrémités, le bras 7 est relié à libre articulation par un axe commun 9 aux extrémités respectives de deux biellettes 10 articulées, par leurs extrémités opposées, aux demi-coquilles 3 en des points de celles-ci écartés symétriquement de l'axe 4. Tout pivotement du bras 7 autour de l'axe 8 dans un sens ou dans l'autre se traduit par un mouvement alternatif de l'axe 9 (flèche 11) le rapprochant ou l'éloignant de l'axe 4, et donc par la fermeture ou l'ouverture, respectivement, du moule.

A son autre extrémité, le bras 7 porte un galet fou ou galet suiveur 12 apte à coopérer avec une came profilée 13 en forme de gouttière creusée dans une pièce 14 animée d'un mouvement de rotation autour d'un axe 15 : à cet effet la pièce 14 peut être supportée par un plateau 16 tournant autour de l'axe 16. Bien entendu, une dispostion inverse, avec le galet suiveur supporté par le plateau tournant et la came prévue en bout du bras 7, peut également être envisagée. La came 13 en forme de gouttière ou de gorge possède deux faces latérales sensiblement parallèles aptes à guider le galet suiveur 12 dans des sens de déplacement opposés radialement.

La came est profilée pour déterminer quatre limites fonctionnelles successives de positionnement du bras, savoir comme montré sur la figure 1 (la flèche 17 indiquant le sens de rotation continue de la pièce 14):
- limite A : début d'ouverture du moule,
- limite B : fin d'ouverture du moule,
- limite C : début de fermeture du moule,
- limite D : fin de fermeture du moule.

Autrement dit, pendant que le galet 12 est au contact de la came 13 entre les limites B et C, le moule est ouvert et un récipient achevé peut être extrait, puis une préforme chaude peut y être introduite.

De même, pendant que le galet est dégagé de la came 13 entre les limites D et A, le moule est fermé et l'opération de soufflage ou d'étirage-soufflage peut être réalisée.

Le moule est maintenu verrouillé en position de fermeture par des moyens de verrouillage spécifiques 18 et l'ensemble galet 12/came 13 n'a pas à assurer le maintien du moule en position fermée : dans ces conditions, la came 13 n'a pas à s'étendre entre les limites D et A : comme représenté sur la figure 1, la came 13 s'étend uniquement sur une longueur curviligne entre les limites A et D. Autrement dit, quand le moule est fermé, la came 13 ne coopère pas avec le galet 12 et le galet 12 est "en l'air" (représentation en trait mixte sur la figure 1). Ainsi la longueur de la came 13 est optimisée en étant réduite à un minimum : ceci réduit l'usure du galet et facilite la maintenance en permettant de forcer les mouvements du moule lorsque la machine est à l'arrêt et le galet est sorti de la came.

Dans le mode de réalisation montré à la figure 1, le bras 7 n'est pas constitué d'une seule pièce, mais est constitué de deux sous-bras respectivement 7a et 7b montés en rotation de façon coaxiale sur l'axe 8 et s'étendant de part et d'autre de celui-ci ; les deux sous-bras 7a et 7b sont solidarisés l'un à l'autre en rotation de façon coxiale sur l'axe 8 et s'étendant de part et d'autre de celui-ci ; les deux sous-bras 7a et 7b sont solidarisés l'un à l'autre en rotation par un organe de sécurité 19, tel un limiteur de couple, susceptible de libérer les deux sous-bras l'un de l'autre dans le cas où le bras est soumis à un effort supérieur à un seuil prédéterminé.

L'entraînement du plateau 16 en rotation est assuré par un moteur (moteur électrique notamment), non montré, et par un lien sans fin 20, tel qu'une courroie crantée, coopérant sans glissement avec une roue ou poulie 21 coaxiale à l'axe 15 et solidaire en rotation de celui-ci.

Sur l'axe 15 est également calé en rotation un organe de préhension du type pince tournante (non montrée) qui est animée d'un mouvement complexe de rotation et de déplacement radial sous l'action d'une came (à titre d'exemple le document FR-A-2 479 077 décrit un agencement possible). Cette pince tournante saisit les préformes chaudes à la sortie du four et les amène dans le moule ouvert, la trajectoire suivie par la préforme étant schématisée en 22 de façon circulaire sur la figure 1.

Grâce à cet agencement, on est assuré d'un synchronisme parfait entre le mouvement de la pince tournante et l'opération de moulage, autrement dit entre les mouvements d'ouverture et de fermeture du moule et la présentation des préformes.

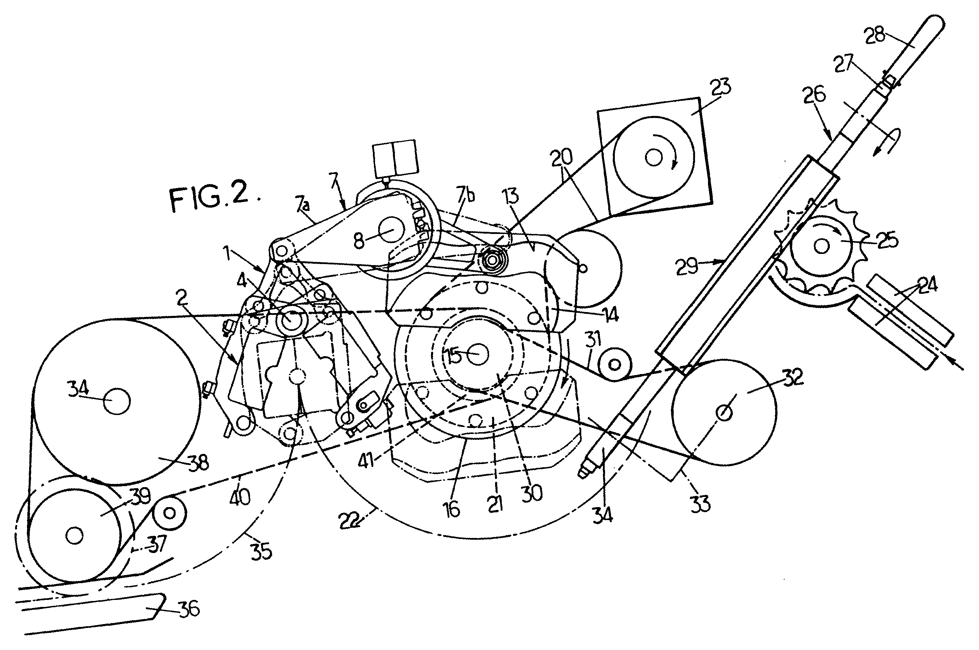

Le dispositif de moulage qui vient d'être décrit se prête particulièrement à la réalisation d'une installation complète de fabrication de récipients élaborée autour dudit dispositif de moulage. La figure 2 représente de façon très schématique, en vue de dessus, une telle installation. Sur la figure 2, on a conservé les mêmes références numériques pour désigner les mêmes organes qu'à la figure 1.

Dans cette installation la courroie 20 entraînant l'axe 15 par l'intermédiaire de la poulie 21 est mûe par la roue de sortie d'un moteur électrique 23.

Les préformes sont amenées en position verticale, col en haut, par une glissière 24 jusqu'à une roue 25 de chargement individuel et de mise au pas qui amène les préformes sous des moyens de transfert 26. Les moyens de transfert 26 sont constitués sous forme d'une chaîne sans fin allongée tournant autour de deux roues extrêmes et équipée d'une succession d'organes de préhension 27 qui saisissent les préformes 28 disposées col en haut sur la roue 25, puis après retournement les déplacent col en bas à travers un four 29 dans lequel elles sont chauffées. A la sortie du four, les préformes chaudes sont saisies par la pince tournante précitée, tournant autour de l'axe 15, pour être introduites dans le moule 2 ouvert.

L'entraînement des moyens ci-dessus s'effectue de la façon suivante. Sur l'axe 15 est calée une poulie 30 qui, par l'intermédiaire d'un lien sans fin 31 tel qu'une courroie crantée, entraîne une poulie 32 associée à un renvoi d'angle 33 pour animer une des zones d'extrémité 34 des moyens de transfert 26. Quant à la roue de chargement 25, elle est solidaire d'une roue dentée coaxiale (non visible sur le dessin) qui engrène avec la chaîne sans fin formant les moyens de transfert 26 et est entraînée par celle-ci.

De l'autre côté du moule 2 est prévue une pince tournante d'extraction (non représentée) montée sur un axe 34 et agencée pour saisir les récipients dans le moule ouvert, puis pour les en extraire selon une trajectoire schématisée sous forme d'une trajectoire en arc de cercle 35 qui les amène à l'entrée d'une glissière de sortie 36. Dans une variante, ils sont propulsés sur la glissière de sortie 36 par un mécanisme rotatif 37. Dans ce cas à la pince tournante et au mécanisme 37 sont associées des poulies coaxiales d'entraînement en rotation 38 et 39 respectivement sur lesquelles passe un lien sans fin tel qu'une courroie crantée 40 entraînée par une poulie 41 solidaire du susdit axe 15.

Grâce à l'agencement qui vient d'être décrit, l'installation est entièrement animée par un moteur unique, sans possibilité de glissement d'un mécanisme par rapport à l'autre, et tous les mouvements sont parfaitement synchronisés. Bien entendu, des prises de mouvement auxiliaires peuvent être prévues pour déplacer certains composants mobiles non signalés plus haut, par exemple déplacement du fond de moule, déplacement de la tige d'élongation, commande du soufflage, dégazage de la cavité de moulage en fin d'opération, etc.

On peut aussi animer ces composants auxiliaires par des moteurs individuels en prévoyant une synchronisation prise sur un des organes tournants entraînés positivement par le moteur, par exemple la zone d'entraînement de la pince d'extraction.

En outre des dispositifs de sécurité tels que des limiteurs de couple peuvent être associés & chaque organe tournant pour détecter toute surcharge accidentelle et provoquer l'arrêt immédiat de l'installation.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif de moulage, par soufflage ou étirage-soufflage, de récipients, notamment de bouteilles, à partir de préformes en matériau thermoplastique, ce dispositif comportant un moule (2) unique de type portefeuille présentant deux demi-coquilles (3) raccordées l'une à l'autre par un axe fixe de pivotement mutuel (4) coïncidant avec des bords respectifs des deux demi-coquilles (3) et des moyens d'actionnement (5) associés aux deux demi-coquilles (3)pour faire pivoter celles-ci l'une par rapport à l'autre dans le sens de la fermeture du moule ou dans le sens de l'ouverture du moule, caractérisé en ce que les moyens d'actionnement (5) comprennent un bras mobile (7) monté à libre rotation sur un axe de support (8) et solidarisé auxdites deux demi-coquilles (3), ce bras supportant en outre un galet suiveur (12), alternativement une came de guidage, apte à coopérer avec une came de guidage tournante (13), alternativement respectivement avec un galet suiveur entraîné sur une trajectoire circulaire, ladite came (13) étant profilée de manière à provoquer le déplacement du bras (7) afin de commander l'ouverture et la fermeture du moule, et des moyens moteurs (20, 21, 23) pour entraîner la came tournante (13), alternativement respectivement le galet suiveur, lesdits moyens moteurs étant synchronisés avec l'alimentation du moule en préformes.

2. Dispositif selon la revendication 1, caractérisé en ce que l'axe (8) de support du bras est situé dans une zone du bras comprise entre ses deux extrémités, en ce qu'une première extrémité du bras est solidarisée aux deux demi-coquilles (3) et en ce qu'une seconde extrémité du bras supporte le galet suiveur (12), alternativement respectivement la came.

3. Dispositif selon la revendication 2, caractérisé en ce que, d'une façon en soi connue, les moyens d'actionnement (5) comprennent en outre deux biellettes (10) articulées à libre rotation par une de leurs extrémités à la susdite première extrémité du bras (7) et articulées à libre rotation par leur autre extrémité respectivement aux deux demi-coquilles (3) de part et d'autre de l'axe de pivotement mutuel (4) de celles-ci.

4. Dispositif selon l'une quelconque des revendications 1 à 3, caractérisé en ce que le galet suiveur (12) est porté par le bras (7) et en ce que la came tournante (13) est supportée par un plateau tournant (16).

5. Dispositif selon l'une quelconque des revendications 1 à 4, caractérisé en ce que la came (13) est configurée pour coopérer avec le galet suiveur (12) depuis au moins le début d'ouverture du moule jusqu'à au moins la fin de fermeture du moule et en ce que des moyens de verrouillage auxiliaire (18), indépendants des moyens d'actionnements (5) précités, sont prévus pour maintenir le moule verrouillé au cours du moulage depuis la fin de fermeture du moule jusqu'au début d'ouverture du moule.

6. Dispositif selon la revendication 5, caractérisé en ce que la came (13) s'étend selon un tronçon ouvert et en ce qu'elle ne coopère plus avec le galet suiveur (12) entre au moins la fin du verrouillage du moule et au moins le début du déverrouillage du moule.

7. Dispositif selon l'une quelconque des revendications 1 à 6, caractérisé en ce que la came (13) est configurée en gorge possédant deux faces latérales sensiblement parallèles aptes à guider le galet suiveur (12) dans des sens de déplacement opposés radialement.

8. Dispositif selon l'une quelconque des revendications 1 à 7, auquel est associé un mécanisme d'amenée des préformes chaudes à pince tournante (22), caractérisé en ce que la pince tournante est coaxiale à la came tournante, alternativement respectivement au galet tournant et solidaire de celle-ci, alternativement respectivement de celui en rotation.

9. Installation de fabrication de récipients, notamment de bouteilles en matériau thermoplastique par soufflage ou étirage-soufflage de préformes chaudes, comportant
- des moyens (24) d'alimentation en préformes présentées accolées les unes à la suite des autres en position verticale,
- une roue (25) de chargement et de mise à un pas d'espacement prédéterminé des préformes délivrées par les moyens d'alimentation,
- une chaîne sans fin (26) de moyens de transfert des préformes entraînée par une roue d'entraînement (34) et agencée pour saisir les préformes une à une sur la roue de chargement (25) et pour les faire traverser un four (29) de chauffage à température prédéterminée en position col en bas,
- une pince tournante (22) d'introduction apte à saisir les préformes une à une sur la chaîne de transfert et les amener dans le dispositif de moulage (1),
- un dispositif de moulage (1) à moule unique selon l'une quelconque des revendications 1 à 8, et
- une pince tournante d'extraction (35) apte à saisir les récipients moulés dans le dispositif de moulage et à les emmener vers des moyens d'évacuation (36), caractérisé en ce qu'il comprend en outre
- un organe moteur tournant unique (23),
- et des moyens tournants d'entraînement à lien sans fin (20, 31, 40) propres à entraîner, sans possibilité de glissement, les éléments ci-dessus de l'installation à partir du moteur unique (23).

10. Installation selon la revendication 9, dans laquelle le dispositif de moulage à moule unique est agencé selon la revendication 4, caractérisée en ce que la pince tournante d'introduction (22) est coaxiale à l'axe (15) de rotation de la came tournante (13) et solidaire de celle-ci en rotation.

11. Installation selon la revendication 10, caractérisée en ce que, d'une part la came tournante (13) et la pince d'introduction (22), d'autre part la pince d'extraction (35) et d'autre part enfin la roue (34) d'entraînement de la chaîne de transfert (26) sont entraînées par des courroies respectives (20, 40, 31).

12. Installation selon la revendication 11, caractérisée en ce que la roue de chargement (25) est entraînée par la chaîne de transfert (26).

## Claims

1. Device for blow molding or stretch-blow molding containers, especially bottles, from thermoplastic preforms, this device including a single bill-fold type mold (2), having two half-shells (3) joined to each other by a fixed mutual pivoting pin (4), coinciding with respective edges of the two half-shells (3), and actuation means (5) associated with the two half-shells (3) in order to pivot the latter with respect to each other in the mold-closing direction or in the mold-opening direction, characterized in that the actuation means (5) comprise a movable arm (7) mounted so as to rotate freely about a support pin and fastened to said half-shells (3), this arm furthermore supporting a cam follower (12), or a guide cam, capable of engaging with a rotating guide cam (13), or alternatively with a cam follower driven over a circular path, said cam (13) being profiled in such a manner as to cause the arm (7) to move so as to open and close the mold, and drive means (20, 21, 23) for driving the rotating cam (13), or alternatively the cam follower, said drive means being synchronized with the feeding of the mold with preforms.

2. Device according to claim 1, characterized in that the pin for supporting the arm is located in a region of the arm lying between its two ends, in that a first end of the arm is fastened to the two half-shells (3), and in that a second end of the arm supports the cam follower (12), or alternatively the cam.

3. Device according to claim 2, characterized in that, in a manner known per se, the actuation means (5) furthermore comprise two swing links (10) which are articulated, so as to rotate freely by one of their ends, to the abovementioned first end of the arm (7) and are articulated, so as to rotate freely by their other end, respectively to the two half-shells (3) on each side of the mutual pivoting pin (4) of the latter.

4. Device according to any one of claims 1 to 3, characterized in that the cam follower (12) is borne by the arm (7), and in that the rotating cam (13) is supported by a rotating plate (16).

5. Device according to any one of claims 1 to 4, characterized in that the cam (13) is configured in order to engage with the cam follower (12) from at least the start of mold opening until at least the end of mold closing,and in that auxiliary locking means (18), which are independent of the aforementioned actuation means (5), are provided in order to keep the mold locked during molding from the end of mold closing until the start of mold opening.

6. Device according to claim 5, characterized in that the cam (13) extends along an open section, and in that it no longer engages with the cam follower (12) between at least the end of mold locking and at least the start of mold unlocking.

7. Device according to any one of claims 1 to 6, characterized in that the cam (13) is configured in the form of a groove having two approximately parallel side faces capable of guiding the cam follower (12) in radially opposed directions of movement.

8. Device according to any one of claims 1 to 7, with which a rotating-clamp mechanism (22) for feeding the hot preforms is associated, characterized in that the rotating clamp is coaxial with the rotating cam, or alternatively with the rotating roller, and fastened to the rotating cam, or alternatively to the rotating roller.

9. Plant for manufacturing containers, especially thermoplastic bottles, by blow molding or stretch-blow molding hot preforms, which includes
- means (24) for feeding preforms presented side by side one after the other in a vertical position,
- a wheel (25) for loading and for stepping by a predetermined spacing the preforms delivered by the feed means,
- an endless chain (26) of preform-transfer means which is driven by a drive wheel (34) and designed to grip the preforms one by one on the loading wheel (25) and to make them pass through a heating oven (29) at a predetermined temperature in the neck-down position,
- a rotating insertion clamp (22) capable of gripping the preforms one by one on the transfer chain and feeding them into the molding device (1),
- a single-mold molding device (1) according to any one of claims 1 to 8, and
- a rotating extraction clamp (35) capable of gripping the molded containers in the molding device and of taking them away to removal means (36), characterized in that it furthermore comprises a single rotating driving member (23),
- and rotating endless link driving means (20, 31, 40) suitable for driving, without any possibility of slippage, the abovementioned elements of the plant by means of the single motor (23).

10. Plant according to claim 9, in which the single-mold molding device is arranged according to claim 4, characterized in that the rotating insertion clamp (22) is coaxial with the rotation pin (15) of the rotating cam (13) and rotationally integral with the latter.

11. Plant according to claim 10, characterized in that on the one hand the rotating cam (13) and the insertion clamp (22), on the other hand the extraction clamp (35) and finally on the other hand the wheel (34) for driving the transfer chain (26) are driven by respective belts (20, 40, 31).

12. Plant according to claim 11, characterized in that the loading wheel (25) is driven by the transfer chain (26).

## Patentansprüche

1. Formvorrichtung zum Blas- oder Blasziehformen von Behältnissen, insbesondere Flaschen, ausgehend von Vorformlingen aus thermoplastischem Material, wobei die Vorrichtung aufweist: eine einzige Form (2) vom zusammenklappbaren Typ mit zwei Halbschalen (3), miteinander verbunden durch eine feststehende Achse (4) zum wechselseitigen Verschwenken, die mit jeweiligen Rändern der beiden Halbschalen (3) zusammenfällt, und den beiden Halbschalen (3) zugeordneten Betätigungseinrichtungen (5) zum Verschwenken derselben in Bezug aufeinander in der Schließrichtung der Form oder in der Öffnungsrichtung der Form, dadurch gekennzeichnet, daß die Betätigungseinrichtungen (5) einen frei drehend auf einer Trägerachse (8) gelagerten und fest an den beiden Halbschalen (3) angebrachten beweglichen Arm (7) aufweisen, wobei der Arm des weiteren eine Nachführrolle (12) trägt, alternativ eine Führungskurve, die dazu geeignet ist, mit einer drehenden Führungskurve (13) bzw. alternativ mit einer auf einer Kreisbahn angetriebenen Nachführrolle zusammenzuwirken, wobei die Kurve (13) derart gestaltet ist, daß sie die Bewegung des Armes (7) zum Steuern des Öffnens und Schließens der Form hervorruft, sowie Bewegungseinrichtungen (20, 21, 23) zum Antreiben der drehenden Kurve (13) bzw. alternativ der Nachführrolle, wobei die Bewegungseinrichtungen mit der Zuführung von Vorformlingen zur Form synchronisiert sind.

2. Vorrichtung nach Anspruch 1, dadurch gekennzeichnet, daß die Trägerachse (8) des Armes in einer zwischen den beiden Enden des Armes liegenden Zone angeordnet ist, dadurch, daß ein erstes Ende des Armes fest an den beiden Halbschalen (3) angebracht ist, sowie dadurch, daß ein zweites Ende des Armes die Nachführrolle (12) bzw. alternativ die Kurve trägt.

3. Vorrichtung nach Anspruch 2, dadurch gekennzeichnet, daß die Betätigungseinrichtungen (5) des weiteren auf an sich bekannte Weise zwei Lenker (10) aufweisen, die mit einem ihrer Enden frei drehend an dem ersten Ende des Armes (7) angelenkt sind und jeweils mit ihrem anderen Ende an einer der beiden Halbschalen (3) zu beiden Seiten von deren gemeinsamer Schwenkachse (4) frei drehend angelenkt sind.

4. Vorrichtung nach einem der Ansprüche 1 bis 3, dadurch gekennzeichnet, daß die Nachführrolle (12) von dem Arm (7) getragen ist, sowie dadurch, daß die drehende Kurve (13) von einer Drehscheibe (16) getragen ist.

5. Vorrichtung nach einem der Ansprüche 1 bis 4, dadurch gekennzeichnet, daß die Kurve (13) so ausgebildet ist, daß sie mit der Nachführrolle (12) ab mindestens dem Beginn des Öffnens der Form bis mindestens dem Ende des Schließens der Form zusammenwirkt, sowie dadurch, daß von den genannten Betätigungseinrichtungen (5) unabhängige Hilfsverriegelungseinrichtungen (18) vorgesehen sind, welche die Form im Verlauf des Formens ab dem Ende des Schließens der Form bis zum Beginn des Öffnens der Form verriegelt halten.

6. Vorrichtung nach Anspruch 5, dadurch gekennzeichnet, daß die Kurve (13) sich entlang eines offenen Abschnitts erstreckt, sowie dadurch, daß sie zwischen mindestens dem Ende des Verriegelns der Form und mindestens dem Beginn des Entriegelns der Form nicht mehr mit der Nachführrolle (12) zusammenwirkt.

7. Vorrichtung nach einem der Ansprüche 1 bis 6, dadurch gekennzeichnet, daß die Kurve (13) als Auskehlung mit zwei im wesentlichen parallelen Seitenflächen ausgebildet ist, die dazu geeignet sind, die Nachführrolle (12) in radial entgegengesetzten Bewegungsrichtungen zu führen.

8. Vorrichtung nach einem der Ansprüche 1 bis 7, der ein Mechanismus mit Drehzange (22) zum Zuführen der warmen Vorformlinge zugeordnet ist, dadurch gekennzeichnet, daß die Drehzange koaxial mit der drehenden Kurve bzw. alternativ mit der drehenden Rolle angeordnet sowie fest daran angebracht bzw. alternativ als Einheit damit drehbar ist.

9. Anlage für die Herstellung von Behältnissen, insbesondere Flaschen, aus thermoplastischem Material mittels Blas- oder Blasziehformen von warmen Vorformlingen, mit:
- Einrichtungen (24) zum Zuführen von Vorformlingen, die aneinander aufgereiht in vertikaler Anordnung angeliefert werden,
- einem Rad (25) zum Aufgeben und Anordnen der von der Zuführeinrichtung angelieferten Vorformlinge in einem vorgegebenen Abstand untereinander,
- einer Endloskette (26) von Einrichtungen für den Transfer der Vorformlinge, die von einem Treibrad (34) angetrieben und dazu ausgelegt ist, die Vorformlinge einzeln auf dem Aufgaberad (25) zu ergreifen und sie mit dem Hals nach unten angeordnet durch einen Heizofen (29) zum Erwärmen auf eine vorgegebene Temperatur hindurchzuführen,
- einer Aufgabedrehzange (22), die dazu geeignet ist, die Vorformlinge einzeln auf der Transferkette zu ergreifen und sie in die Formvorrichtung (1) zu verbringen,
- einer Formvorrichtung (1) mit einer einzigen Form nach einem der Ansprüche 1 bis 8, und
- einer Entnahmedrehzange (35), die dazu geeignet ist, die geformten Behältnisse in der Formvorrichtung zu ergreifen und sie auf Austrageinrichtungen (36) hinzuführen, dadurch gekennzeichnet, daß sie des weiteren aufweist:
- ein einziges Drehbewegungsorgan (23),
- sowie drehende Endlosband-Antriebseinrichtungen (20, 31, 40), die dazu geeignet sind, die obenstehend genannten Elemente der Anlage ausgehend von dem einzigen Motor (23) schlupffrei anzutreiben.

10. Anlage nach Anspruch 9, in der die Formvorrichtung mit einer einzigen Form gemäß Anspruch 4 ausgeführt ist, dadurch gekennzeichnet, daß die Aufgabedrehzange (22) koaxial mit der Drehachse (15) der drehenden Kurve (13) angeordnet und als Einheit mit dieser drehbar ist.

11. Anlage nach Anspruch 10, dadurch gekennzeichnet, daß zum einen die drehende Kurve (13) und die Aufgabedrehzange (22), zum anderen die Entnahmezange (35), sowie des weiteren das Treibrad (34) der Transferkette (26) von jeweiligen Riemen (20, 40, 31) angetrieben sind.

12. Anlage nach Anspruch 11, dadurch gekennzeichnet, daß das Aufgaberad (25) von der Transferkette (26) angetrieben ist.
